(19) Europäisches Patentamt / European Patent Office / Office européen des brevets

(11) **EP 1 707 303 B1**

(12) **EUROPEAN PATENT SPECIFICATION**

(45) Date of publication and mention
of the grant of the patent:
**12.09.2012 Bulletin 2012/37**

(51) Int Cl.:
*B23K 35/30* (2006.01)          *C22C 38/02* (2006.01)
*C22C 38/04* (2006.01)          *C22C 38/08* (2006.01)
*C22C 38/12* (2006.01)          *C22C 38/14* (2006.01)
*B23K 35/02* (2006.01)

(21) Application number: **06003516.9**

(22) Date of filing: **21.02.2006**

(54) **Low alloy steel weld metal and flux cored wire**

Leicht legierte Schweissmetallzusammensetzung und Fülldraht

alliage de soudure faiblement allié et fil fourré

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **31.03.2005 JP 2005100761**

(43) Date of publication of application:
**04.10.2006 Bulletin 2006/40**

(73) Proprietor: **KABUSHIKI KAISHA KOBE SEIKO
SHO
Kobe-shi, Hyogo 651-8585 (CH)**

(72) Inventors:
• **Suenaga, Kazuyuki
urakouchi
Fujisawa-shi
Kanagawa 251-0014 (JP)**
• **Hidaka, Takeshi
urakouchi
Fujisawa-shi
Kanagawa 251-0014 (JP)**
• **Okazaki, Yoshitomi
Nishi-ku,
Kobe-shi,
Hyogo 651-2271 (JP)**

(74) Representative: **Müller-Boré & Partner
Patentanwälte
Grafinger Straße 2
81671 München (DE)**

(56) References cited:
**US-A- 3 868 487          US-A- 4 120 440
US-A1- 2005 155 960**

• **PATENT ABSTRACTS OF JAPAN vol. 2003, no.
12, 5 December 2003 (2003-12-05) -& JP 2004
315962 A (KOBE STEEL LTD), 11 November 2004
(2004-11-11)**
• **PATENT ABSTRACTS OF JAPAN vol. 2003, no.
08, 6 August 2003 (2003-08-06) -& JP 2003 094196
A (NIPPON STEEL & SUMIKIN WELDING CO LTD),
2 April 2003 (2003-04-02)**
• **DATABASE COMPENDEX [Online]
ENGINEERING INFORMATION, INC., NEW YORK,
NY, US; July 1994 (1994-07), ZHOU LIXIA ET AL:
"Effect of the microalloying elements on
microstructure and toughness of Si-Mn-Mo
system" XP002386048 Database accession no.
EIX95172612950 & HSI AN CHIAO TUNG TA
HSUEH; HSI-AN CHIAO TUNG TA HSUEH/
JOURNAL OF XI'AN JIAOTONG UNIVERSITY
JULY 1994 PRESS OF XI'AN JIAOTONG
UNIVERSITY, BEIJING, CHINA, vol. 28, no. 4, July
1994 (1994-07), pages 66-72,**
• **PATENT ABSTRACTS OF JAPAN vol. 2000, no.
12, 3 January 2001 (2001-01-03) -& JP 2000 263283
A (KOBE STEEL LTD), 26 September 2000
(2000-09-26)**
• **PATENT ABSTRACTS OF JAPAN vol. 007, no. 112
(M-215), 17 May 1983 (1983-05-17) -& JP 58 032598
A (KAWASAKI SEITETSU KK), 25 February 1983
(1983-02-25)**

**Description**

The present invention relates to a low alloy steel weld metal formed by gas shielded arc welding using a flux cored wire, and having a tensile strength of the order of 490 to 670 MPa, and to a flux cored wire for providing the same. More particularly, the invention is directed to a low alloy steel weld metal with good low temperature toughness, and to a flux cored wire for providing the same.

In recent years, energy development has proceeded to colder land and sea areas, where components are manufactured using a steel for low temperature. These components at the cold land and sea areas, however, are designed taking into consideration weather conditions at the land and sea areas where they are operated, in addition to a requirement for the normal low temperature toughness in the prior art, and thus require the higher toughness steel. Furthermore, the requirement for the application of flux cored wires to this kind of welding of the low temperature steel has been increased for the purpose of achieving high efficiency of the welding without skills.

Under such a background, a technology for improving toughness of the weld metal at the low temperature by controlling chemical components and a solid solution Ti content of the weld metal is disclosed in, for example, JP-A-263283/2000. The known art disclosed in the above-mentioned patent document focuses on formation of acicular ferrite in prior austenite grain.

Although in the foregoing prior art, the formation of acicular ferrite in the prior austenite grain is restrained to improve the toughness, a phenomenon in a prior austenite grain boundary is not taken into consideration at all. Thus, the toughness of weld metal when welding the low temperature steel is not sufficient.

JP 2004 315962A describes a weld metal having a specific composition, obtained by gas shielded are welding using a flux cored wire.

The invention has been made in view of the foregoing problems, and it is an object of the invention to provide a low temperature steel weld metal with improved toughness when assembling components by performing gas shielded arc welding of a steel for the low temperature, and a flux cored wire for providing the same.

In one aspect of the invention, there is provided a weld metal with good low temperature toughness obtained by gas shielded arc welding using a flux cored wire which includes a steel sheath, and a flux charged into the steel sheath. The weld metal comprises C: 0.04 to 0.08 % by mass, Si: 0.20 to 0.50 % by mass, Mn: 0.80 to 1.70 % by mass, Ti: 0.030 to 0.080 % by mass, Ni: 0.30 to 3.00 % by mass, Mo: 0.01 to 0.20 % by mass, B: 0.0020 to 0.0070 % by mass, O: 0.040 to 0.070 % by mass, Al: 0.01 % by mass or less, and the balance of Fe and incidental impurities. The following equation is satisfied: $([C] \times [Mn] \times [Ti])/([Si] \times [O]) = 0.20$ to 0.60, where [C], [Mn], [Ti], [Si], and [O] represent contents of C, Mn, Ti, Si, and O, respectively, wherein a volume ratio of ferrite side plates in a columnar structure is 20 % by mass or less.

In another aspect of the invention, the flux cored wire includes a steel sheath, and a flux charged into the steel sheath, and can provide the above-mentioned weld metal by performing gas shielded arc welding on at least one base material within the following composition limits. The composition of the base material includes, C: 0.03 to 0.15 % by mass, Si: 0.10 to 0.50 % by mass, Mn: 0.80 to 1.80 % by mass, P: 0.02 % by mass or less, S: 0.02 % by mass or less, Ni: 0.01 to 3.00 % by mass, Cr: 0.2 % by mass or less, Mo: 0.2 % by mass or less, Ti: 0.08 % by mass or less, Al: 0.05 % by mass or less, B: 0.005 % by mass or less, and the balance of Fe and incidental impurities.

In this case, for a metal flux cored wire embodying the flux cored wire of the invention, the wire comprises based on the total mass of the entire wire, Fe: 92.0 to 98.5 % by mass, C: 0.03 to 0.09 % by mass, Mn: 1.0 to 2.5 % by mass, Si: 0.20 to 0.60 % by mass, Ti: 0.05 to 0.30 % by mass (in terms of Ti, which corresponds to Ti content in Ti alloy and Ti oxide), B: 0.003 to 0.012 % by mass, Ni: 0.3 to 3.0 % by mass, Mo: 0.01 to 0.20 % by mass, and Al: 0.05 % by mass or less.

Alternatively, for a flux cored wire for flat and horizontal fillet welding embodying the flux cored wire of the invention, the wire comprises based on the total mass of the entire wire, Fe: 87 to 95 % by mass, Ti: 1.0 to 2.6 % by mass (in terms of Ti, which corresponds to Ti content in Ti alloy and Ti oxide), C: 0.03 to 0.09 % by mass, Mn: 1.0 to 2.5 % by mass, Si: 0.20 to 0.60 % by mass, B: 0.003 to 0.012 % by mass, Ni: 0.3 to 3.0 % by mass, Mo: 0.01 to 0.20 % by mass, and Al: 0.05 % by mass or less, wherein the $ZrO_2$ content of the flux is 0.02% to 0.50% by mass, the $Al_2O_3$ content of the flux is 0.02% to 0.80% by mass, the $SiO_2$ content of the flux is 0.1% to 0.5% by mass and the Mg content of the flux is 0.2 to 1.0% by mass, based on the total mass of the wire.

Alternatively, for a titania-based flux cored wire for all position welding embodying the flux cored wire of the invention, the wire comprises based on the total mass of the entire wire, Fe: 85 to 93 % by mass, Ti: 2.4 to 3.6 % by mass (in terms of Ti, which corresponds to Ti content in Ti alloy and Ti oxide), C: 0.03 to 0.09 % by mass, Mn: 1.0 to 2.5 % by mass, Si: 0.20 to 0.60 % by mass, B: 0.003 to 0.012 % by mass, Ni: 0.3 to 3.0 % by mass, Mo: 0.01 to 0.20 % by mass, and Al: 0.05 % by mass or less, wherein the $ZrO_2$ content of the flux is 0.02% to 0.50% by mass, the $Al_2O_3$ content of the flux is 0.02% to 0.80% by mass, the $SiO_2$ content of the flux is 0.1% to 0.5% by mass and the Mg content of the flux is 0.2 to 1.0% by mass, based on the total mass of the wire.

According to the invention, the composition of the weld metal is set as mentioned above, and the following equation is satisfied: ([C] × [Mn] × [Ti])/([Si] × [O]) = 0.20 to 0.60. This can prevent occurrence of ferrite side plates at the prior austenite grain boundary in the columnar structure of the weld metal, resulting in good low temperature toughness which might not be obtained by the conventional weld metal. Furthermore, the appropriate composition of the flux cored wire can provide the above-mentioned weld metal with good low temperature toughness. Thus, according to the invention, the stability of the components used under low temperature can be further enhanced.

Reference will now be made to exemplary embodiments of the invention which are illustrated in the accompanying drawings.

(1) Weld Metal

First, the reason for composition limits of a weld metal of the invention will be described in detail below.

"C (carbon)"

Carbon in an appropriate amount has an effect of stabilizing toughness because of stabilization of cementite. If the C content is less than 0.04 % by mass in the weld metal, the stabilizing effect of toughness becomes small. If the C content is greater than 0.08 % by mass, resistance to hot crack is degraded. Accordingly, the C content is preferably in a range of 0.05 to 0.07 % by mass.

"Si (silicon)"

Silicon acts as a deoxidizing agent, while affecting a microstructure. If the amount of Si is large, high proportions of ferrite side plates occur from the prior austenite grain boundary, resulting in reduced toughness. If the amount of Si is less than 0.20 % by mass in the weld metal, blowholes are likely to occur due to insufficient deoxidation. If the amount of Si is greater than 0.50 % by mass, occurrence of the ferrite side plates in the aforesaid prior austenite grain boundary cannot be restrained, resulting in reduced toughness of the weld metal. Accordingly, the Si content is preferably in a range of 0.25 to 0.45 % by mass.

"Mn (manganese)"

Manganese acts as a deoxidizing agent, while affecting the strength and toughness of the weld metal. If the Mn content is less than 0.80 % by mass in the weld metal, the strength of the weld metal is insufficient, and its toughenss is degraded. If the Mn content is greater than 1.70 % by mass, the strength of the metal and its hardenability become excessive, resulting in degraded toughness. Accordingly, the Mn content is preferably in a range of 0.90 to 1.60 % by mass.

"Ti (titanium)"

Titaniumexists in the weldmetal as an oxide, or solid solution. The Ti element in the form of oxide serves as a nucleus of the acicular ferrite in the prior austenite grain boundary to contribute to improve the toughness of the weld metal. That is, in the prior austenite grain boundary, the acicular ferrite is formed with the Ti oxide acting as its nucleus. The acicular ferrite has an effect of contributing to miniaturization of the structure to improve its toughness. If the Ti content is less than 0.30 % by mass in the weld metal, the nucleus cannot be formed sufficiently, and thus coarsening of the ferrite results in degraded toughness of the weld metal. In contrast, if the Ti content is greater than 0.080 % by mass, the amount of the solid solution Ti is excessive, and thus the strength of the weld metal is excessively high, while the toughness thereof is degraded. Accordingly, the Ti content is preferably in a range of 0.040 to 0.070 % by mass.

"Ni (nickel)"

Nickel has an effect that causes a transition temperature of brittle failure to shift to the lower temperature, thereby improving the toughness of the weld metal. However, the excessive addition of Ni causes the hot crack (solidification crack) readily in the weld metal. If the Ni content of the weld metal is less than 0.30 % by mass, the toughness of the weld metal is not improved so much. In contrast, if the Ni content is greater than 3.00 % by mass, the resistance to hot crack is degraded. Accordingly, the Ni content is preferably in a range of 0.35 to 2.80 % by mass.

"Mo (molybdenum)"

Molybdenum is added in an amount of 0.01 % by mass or more in order to ensure the strength of the weld metal. The excessive addition of Mo causes the transition temperature of brittle failure to shift to the higher temperature, thereby resulting in degraded toughness of the weld metal. The Mo content of the weldmetal of 0.20% by mass or less hardly affects the degradation in toughness of the weld metal. Accordingly, the Mo content is preferably in a range of 0.01 to 0.15 % by mass.

"B (boron)"

Boron has an effect that prevents occurrence of grain boundary ferrite due to its segregation into the prior austenite grain boundary, thereby improving the toughness of the weld metal. The excessive addition of B causes the hot crack (solidification crack) readily in the weld metal. If the B content of the weld metal is less than 0.0020 % by mass, the toughness of the weld metal is not improved so much. In contrast, if the B content is greater than 0.0070 % by mass, the resistance to hot crack of the weld metal is degraded. Accordingly, the B content is preferably in a range of 0.0025 to 0.0060 % by mass.

"O (oxygen)"

It is supposed that most of oxygen in the weld metal exists in the form of oxide. Increasing the O content decreases an upper shelf energy of the weldmetal in an impact test. Therefore, in order to obtain the higher toughness in the weld metal, it is important to reduce the O content to a lower level. Reducing the O content to the lower level in the flux cored wire significantly degrades the workability of welding (which leads to increase in spatter, to degradation in weldability of all position welding, or the like), which is not practical. In the invention, it has been found that the O content of 0.040 to 0.070 % by mass in the weld metal can ensure the toughness of the weld metal at low temperature. That is, if the O content in the weld metal is less than 0.040 % by mass, the workability of welding is significantly degraded. In contrast, if the O content is greater than 0.070 % by mass, the upper shelf energy is lowered, resulting in reduced toughness. Accordingly, the O content is preferably in a range of 0.040 to 0.060 % by mass.

"Al (Aluminum)"

Aluminum exists in the form of oxide in the weldmetal to prevent formation of a nucleus of acicular ferrite which may be caused by the Ti oxide in the prior austenite grain boundary. In the weld metal, if the Al content is 0.01 % by mass or less, the formation of acicular ferrite nucleus is reduced. Preferably, the Al content is 0.008 % by mass or less.

"($[C] \times [Mn] \times [Ti]$) / ($[Si] \times [O]$)"

Note that although the toughness of the weld metal at the low temperature can be achieved by the above-mentioned composition limit of each element to some degree, in order to ensure the low temperature toughness, the applicant has found that ($[C] \times [Mn] \times [Ti]$) / ($[Si] \times [O]$) in a range of 0.20 to 0.60 can ensure enough low temperature toughness. The ($[C] \times [Mn] \times [Ti]$) / ($[Si] \times [O]$) of less than 0.20 leads to degradation in hardenability and upper shelf energy, and increase in proportion of the ferrite side plates, thus resulting in the degraded toughness of the weld metal. The ($[C] \times [Mn] \times [Ti]$) / ($[Si] \times [O]$) of greater than 0.60 degrades the toughness of the weld metal due to the excessive hardenability. As a result of observation of the microstructure, a volume ratio of the ferrite side plates in the columnar structure of the weld metal with good low temperature toughness is 20 vol.% or less, and preferably 16 vol.% or less.
A modified structure caused by nucleation from the grain boundary grows into the grains to form the ferrite side plate. This growth is stopped by controlling the presence of an oxide-based inclusion existing in the grain, and of the modified structure in the grain caused by nucleation from the oxide-based inclusion. It is considered that setting the above-mentioned parameter within the range of 0.20 to 0.60 can appropriately control the oxide-based inclusion in the grain, and the modified structure in the grain.

"Balance of Weld Metal"

The balance of weld metal is Fe and incidental impurities. The incidental impurities include, for example, P, S, Cu, Cr, V, Nb, Zr, Co, and Sn. Preferably, P is reduced to 0.02 % by mass or less, S to 0.02 % by mass or less, Cu to 0.3 % by mass or less (when Cu plating is applied to a steel sheath, including a part subjected to the plating), Cr to 0.1 % by mass or less, V to 0.05 % by mass or less, Nb to 0.05 % by mass or less, Zr to 0.01% by mass or less, Co to 0.01 % by mass or less, or Sn to 0.02 % by mass or less.

(2) Flux Cored Wire

Ametal flux cored wire, a flux cored wire for flat and horizontal fillet welding, and a flux cored wire for all position welding which satisfy the following range can be practical because they sufficiently meet the necessary mechanical characteristics and welding usability of the weld metal.

"C (carbon)"

In order to obtain the C content of 0.04 to 0.08 % by mass in the weld metal, the C content of the flux cored wire is set within a range of 0.03 to 0.09 % by mass, based on the total mass of the flux cored wire, and preferably within a range of 0.04 to 0.08 % by mass. Note that carbon sources include, for example, graphite, Fe-Mn, Fe-Si, and addition of C into the steel sheath, and may be used to add C from any one of the flux and the steel sheath.

"Si (silicon)"

In order to obtain the Si content of 0.20 to 0.50 % by mass in the weld metal, the Si content of the flux cored wire is set within a range of 0.20 to 0.60 % by mass, based on the total mass of the flux cored wire, and preferably within a range of 0.25 to 0.55 % by mass. Note that silicon sources include, for example, Fe-Si, Si-Mn, and addition of Si into the steel sheath, and may be used to add Si from any one of the flux and the steel sheath.

"Mn (manganese)"

In order to obtain the Mn content of 0.80 to 1.70 % by mass in the weld metal, the Mn content of the flux cored wire is set within a range of 1.0 to 2.50 % by mass, based on the total mass of the flux cored wire, and preferably within a range of 1.1 to 2.4 % by mass. Note that manganese sources include, for example, metal Mn, Fe-Mn, Si-Mn, and addition of Mn into the steel sheath, and may be used to add Mn from any one of the flux and the steel sheath.

"Ti (titanium)"

In order to obtain the Ti content of 0.030 to 0.080 % by mass in the weld metal, the Ti content of the flux cored wire (Ti content contained in Ti alloy and Ti oxide) is set within a range of 0.05 to 0.30 % by mass in the metal flux cored wire, within a range of 1.0 to 2.6 % by mass in the flux cored wire for the flat and horizontal fillet welding, or within a range of 2.4 to 3.6 % by mass in the flux cored wire for the all position welding. Note that titanium sources include, for example, rutin, titanium oxide, Fe-Ti, and addition of Ti into the steel sheath, and may be used to add Ti from any one of the flux and the steel sheath. Depending on the applications, that is, according to the amount of a slug component required, it is necessary to vary each Ti source content of the wire. Taking into consideration a fact that the Ti of the weld metal originates mainly from a Ti alloy, in order to obtain the weld metal with the desired Ti content, the Ti content of the wire is appropriately adjusted.

"B (boron)"

In order to obtain the B content of 0.0020 to 0.0070 % by mass in the weld metal, the B content of the flux cored wire is set within a range of 0.003 to 0.012 % by mass, based on the total mass of the flux, and preferably within a range of 0.004 to 0.011% by mass. Note that boron sources include, for example, Fe-Si-B alloy.

"Ni (nickel)"

In order to obtain the Ni content of 0.30 to 3.00 % by mass in the weld metal, the Ni content of the flux cored wire is set within a range of 0.3 to 3.0 % by mass, based on the total mass of the flux cored wire, and preferably within a range of 0.3 to 2.9 % by mass. Note that nickel sources include, for example, metal Ni, Ni-Mg, and addition of Ni into the steel sheath, and may be used to add Ni from any one of the flux and the steel sheath.

"Mo (molybdenum)"

In order to obtain the Mo content of 0.01 to 0.20 % by mass in the weld metal, the Mo content of the flux cored wire is set within a range of 0.01 to 0.20 % by mass, based on the total mass of the flux cored wire, and preferably within a range of 0.01 to 0.15 % by mass. Note that molybdenum sources include, for example, metal Mo, Fe-Mo, and addition of Mo into the steel sheath, and may be used to add Mo from any one of the flux and the steel sheath.

"Al (aluminum)"

In order to limit the Al content of the weld metal to 0.01 % by mass or less, the Al content of the flux cored wire is set to 0.05 % by mass or less, based on the total mass of the flux.

"Fe (iron)"

In the flux cored wire for low alloy steel welding, in addition to alloy components, a slag forming agent, an arc stabilizer, and the like may be added thereto depending on applications. These have their respective appropriate ranges of Fe according to the types of the flux cored wires. That is, for the metal flux cored wire, if the Fe content is less than 92.0 % by mass based on the total mass of the wire, the great amount of slag occurs, and thus the good property in view of the welding usability (small amount of slag) of the wire is eliminated. If the Fe content is greater than 98.5 % by mass, the essential alloy components cannot be added. For the flux cored wire for the flat and horizontal fillet welding, if the Fe content is less than 87 % by mass, the great amount of slag occurs, and thus resistance to porosity of the wire is degraded in a primer-coated steel plate or the like. If the Fe content is greater than 95 % by mass, the essential alloy components cannot be added. For the flux coredwire for the all position welding, if the Fe content is greater than 85 % by mass, the slag occurs excessively, and thus welding defects such as slag inclusions are likely to occur. If the Fe content is greater than 93 % by mass, the essential alloy components cannot be added. Note that iron sources include, for example, iron powders, Fe based alloy, and the like in the flux as well as in the steel sheath.

"$ZrO_2$"

If the $ZrO_2$ content of the flux is less than 0.02 % by mass based on the total mass of the wire, evenness of beads is degraded in the flat and horizontal fillet welding. In contrast, if the $ZrO_2$ content is greater than 0.50 % by mass, isopod characteristics of the wire are degraded in the horizontal fillet welding. Furthermore, a shape of the bead in the standing state is convex. Preferably, the $ZrO_2$ content is within a range of 0.05 to 0.45 % by mass. Note that the $ZrO_2$ sources include, for example, zircon sand, zirconia, and the like.

"$Al_2O_3$"

If the $Al_2O_3$ content of the flux is less than 0.02 % by mass based on the total mass of the wire, evenness of beads is degraded in the flat and horizontal fillet welding. In contrast, if the $Al_2O_3$ content is greater than 0.80 % by mass, conformability of the beads is degraded in the flat and horizontal filletwelding. Furthermore, the amount of occurrence of spatter is increased. Accordingly, the $Al_2O_3$ content is preferably in a range of 0.05 to 0.60% by mass. Note that the $Al_2O_3$ sources include, for example, alumina.

"$SiO_2$"

If the $SiO_2$ content of the flux is less than 0.1 % by mass based on the total mass of the wire, evenness of beads is degraded in the flat and horizontal fillet welding. In contrast, when the $SiO_2$ content is greater than 0.5 % by mass, resistance to porosity of the wire is degraded in the horizontal fillet welding. Furthermore, a shape of the bead in the standing state is convex. Preferably, the $SiO_2$ content is in a range of 0.15 to 0.45 % by mass. Note that the $SiO_2$ sources include, for example, silica, potash glass, soda glass, and the like.

"Mg"

If the Mg content of the flux is less than 0.2 % by mass based on the total mass of the wire, sufficient deoxidation of the wire cannot carried out, resulting in degraded toughness of the wire. If the Mg content is greater than 1.0 % by mass, the amount of spatter is increased, and thus the welding usability of the wire is degraded. Preferably, the Mg content is in a range of 0.25 to 0.9 % by mass. Note that the Mg sources include, for example, metal Mg, Al-Mg, Ni-Mg, and the like.

"Other Materials"

In addition to the alloy elements disclosed herein, additional alloy elements and/or arc stabilizer may be added as needed. The flux cored wire may have any diameter within a range of 1.0 to 2.0 mm, and preferably within 1.2 to 1. 6 mm in view of practical use. The sectional shape of the flux cored wire is not particularly limited, and the presence or absence of seams, and the inner shape of the wire may be arbitrarily set.

(3) Base Material

In the invention, in order to obtain the weld metal as described in the appended claim 1, a composition of a welding base material to be used includes:

C: 0.03 to 0.15 % by mass,
Si: 0.10 to 0.50 % by mass,
Mn: 0.80 to 1.80 % by mass,
P: 0.02 % by mass or less,
S: 0.02 % by mass or less,
Ni: 0.01 to 3.00 % by mass,
Cr: 0.2 % by mass or less,
Mo: 0.2 % by mass or less,
Ti: 0.08 % by mass or less,
Al: 0.05 % by mass or less,
B: 0.005 % by mass or less,
Cu: 0.3 % by mass or less,
V: 0.05 % by mass or less,
Nb: 0.05 % by mass or less,
Zr: 0.01 % by mass or less,
Co: 0.01 % by mass or less,
Sn: 0.02 % by mass or less,
Fe: 94 to 99 % by mass, and
the balance of incidental impurities.

Example 1

Flux cored wires with compositions as shown in Table 1 (with a wire diameter of 1.2 mm) were made by charging fluxes in an amount of 13 to 20 % by mass into mild steel sheaths. Using these flux cored wires, property confirmation tests were carried out as follows.

Test 1. Butt Welding

Using the flux cored wires shown in Tables 1 to 3, and the low temperature steel plates with compositions shown in Table 4, weld metals were made by welding under test conditions shown in Table 5. The mechanical characteristics, chemical components, and microstructures of the weldmetals obtained were examined by test methods as shown in Table 6. As to the mechanical characteristics, the wires with a tensile strength of 490 MPa or more, and an absorbed energy of 80 J or more, were determined to be acceptable. The wires No.1 to No.5 as shown in Table 1 have respective compositions that are within a range of compositions of the metal flux cored wires as specified in claim 2 of the invention. The wires No.7 to No.11 as shown in Table 2 have respective compositions that are within a range of compositions of the flux cored wires for the flat and horizontal fillet welding as specified in claim 3 of the invention. The wires No.13 to No.17 as shown in Table 3 have respective compositions that are within a range of compositions of the titania-based flux cored wire for the all position welding as specified in claim 4 of the invention.. The wire No.6 as shown in Table 1 has its Mn content that deviates only from a range of the Mn contents as specified in claim 2. The wire No. 12 as shown in Table 2 has its Mn content that deviates only from a range of the Mn contents as specified in claim 3. The wire No. 18 as shown in Table 3 has its Mn content that deviates only from a range of the Mn contents as specified in claim 4.

Table 1

| No. | Fe | C | Mn | Si | In terms of Ti | B | Ni | Mo | Al | Others (Arc stabilizer and the like) |
|---|---|---|---|---|---|---|---|---|---|---|
| 1 | 95.2 | 0.08 | 2.2 | 0.50 | 0.06 | 0.005 | 1.4 | 0.15 | 0.04 | 0.01 |
| 2 | 95.1 | 0.03 | 1.6 | 0.25 | 0.14 | 0.012 | 2.2 | 0.17 | 0.02 | 0.02 |
| 3 | 97.5 | 0.05 | 1.0 | 0.25 | 0.28 | 0.009 | 0.6 | 0.07 | 0.03 | 0.01 |
| 4 | 96.0 | 0.09 | 2.3 | 0.35 | 0.20 | 0.003 | 0.4 | 0.12 | 0.02 | 0.04 |

(continued)

| No. | Fe | C | Mn | Si | In terms of Ti | B | Ni | Mo | Al | Others (Arc stabilizer and the like) |
|---|---|---|---|---|---|---|---|---|---|---|
| 5 | 93.5 | 0.07 | 2.3 | 0.50 | 0.07 | 0.011 | 2.9 | 0.01 | 0.04 | 0.05 |
| 6 | 97.7 | 0.05 | 0.8 | 0.25 | 0.28 | 0.009 | 0.6 | 0.07 | 0.03 | 0.01 |
| 19 | 98.6 | 0.04 | 0.7 | 0.30 | 0.04 | 0.002 | 0.1 | 0.22 | 0.04 | - |
| 20 | 96.5 | 0.10 | 1.3 | 0.16 | 0.32 | 0.016 | 1.3 | 0.02 | 0.03 | 0.04 |
| 21 | 91.7 | 0.05 | 2.6 | 0.38 | 0.15 | 0.007 | 3.3 | 0.01 | 0.02 | 0.80 |
| 22 | 93.8 | 0.02 | 2.2 | 0.70 | 0.27 | 0.009 | 2.5 | 0.02 | 0.04 | 0.01 |
| 23 | 96.8 | 0.06 | 1.6 | 0.31 | 0.23 | 0.012 | 0.4 | 0.10 | 0.06 | 0.03 |

Table 2

| No. | Fe | C | Mn | Si | In terms of Ti | B | Ni | Mo | Al | ZrO$_2$ | Al$_2$O$_3$ | SiO$_2$ | Mg | Others (Arc stabilizer and the like) |
|---|---|---|---|---|---|---|---|---|---|---|---|---|---|---|
| 7 | 92 | 0.09 | 2.4 | 0.23 | 1.4 | 0.004 | 0.3 | 0.17 | 0.03 | 0.35 | 0.15 | 0.3 | 0.3 | 0.3 |
| 8 | 87 | 0.04 | 2.4 | 0.55 | 2.6 | 0.010 | 3.0 | 0.02 | 0.05 | 0.20 | 0.03 | 0.4 | 0.3 | 0.2 |
| 9 | 92 | 0.04 | 1.1 | 0.20 | 1.1 | 0.011 | 1.6 | 0.08 | 0.03 | 0.05 | 0.75 | 0.1 | 0.9 | 0.2 |
| 10 | 91 | 0.08 | 2.2 | 0.35 | 2.0 | 0.005 | 0.5 | 0.02 | 0.02 | 0.25 | 0.02 | 0.5 | 0.2 | 0.5 |
| 11 | 90 | 0.05 | 2.0 | 0.42 | 2.3 | 0.006 | 0.8 | 0.01 | 0.01 | 0.48 | 0.30 | 0.5 | 0.5 | 0.2 |
| 12 | 92 | 0.04 | 0.9 | 0.20 | 1.1 | 0.011 | 1.6 | 0.08 | 0.03 | 0.05 | 0.75 | 0.1 | 0.9 | 0.2 |
| 24 | 91 | 0.02 | 2.4 | 0.30 | 2.0 | 0.015 | 0.2 | 0.02 | 0.04 | 0.70 | 0.10 | 0.04 | 0.7 | 0.1 |
| 25 | 88 | 0.11 | 2.1 | 0.32 | 2.2 | 0.012 | 3.5 | 0.05 | 0.03 | 0.30 | 0.01 | 0.4 | 0.3 | 0.2 |
| 26 | 86 | 0.05 | 2.8 | 0.15 | 3.2 | 0.002 | 1.5 | 0.11 | 0.06 | 0.20 | 1.00 | 0.7 | 0.1 | 0.8 |
| 27 | 92 | 0.07 | 2.3 | 0.50 | 0.8 | 0.005 | 0.9 | 0.29 | 0.01 | 0.00 | 0.00 | 0.1 | 1.2 | 0.2 |
| 28 | 88 | 0.05 | 0.8 | 0.65 | 2.2 | 0.004 | 3.2 | 0.14 | 0.06 | 0.01 | 0.70 | 0.5 | 0.4 | 0.6 |
| 29 | 96 | 0.02 | 0.9 | 0.15 | 0.9 | 0.002 | 0.2 | 0.01 | 0.01 | 0.01 | 0.01 | 0.04 | 0.1 | 0.2 |

Table 3

| No. | Fe | C | Mn | Si | In terms of Ti | B | Ni | Mo | Al | ZrO$_2$ | Al$_2$O$_3$ | SiO$_2$ | Mg | Others (Arc stabilizer and the like) |
|---|---|---|---|---|---|---|---|---|---|---|---|---|---|---|
| 13 | 89 | 0.08 | 2.3 | 0.25 | 2.8 | 0.004 | 0.3 | 0.17 | 0.05 | 0.45 | 0.12 | 0.4 | 0.2 | 0.2 |
| 14 | 85 | 0.04 | 2.5 | 0.60 | 3.6 | 0.010 | 2.8 | 0.02 | 0.03 | 0.15 | 0.02 | 0.2 | 0.3 | 0.2 |
| 15 | 90 | 0.05 | 1.1 | 0.21 | 2.4 | 0.012 | 1.8 | 0.08 | 0.01 | 0.02 | 0.78 | 0.1 | 1.0 | 0.1 |
| 16 | 89 | 0.08 | 2.2 | 0.30 | 3.2 | 0.006 | 0.4 | 0.02 | 0.02 | 0.20 | 0.05 | 0.5 | 0.3 | 0.4 |
| 17 | 88 | 0.04 | 2.0 | 0.40 | 3.5 | 0.006 | 0.8 | 0.01 | 0.02 | 0.43 | 0.10 | 0.5 | 0.5 | 0.1 |
| 18 | 90 | 0.05 | 0.9 | 0.21 | 2.4 | 0.012 | 1.8 | 0.08 | 0.01 | 0.02 | 0.78 | 0.1 | 1.0 | 0.1 |
| 30 | 89 | 0.02 | 2.4 | 0.30 | 3.0 | 0.015 | 0.2 | 0.02 | 0.03 | 0.60 | 0.10 | 0.05 | 0.6 | 0.3 |
| 31 | 86 | 0.11 | 2.0 | 0.30 | 3.0 | 0.011 | 3.5 | 0.05 | 0.04 | 0.20 | 0.01 | 0.3 | 0.5 | 0.4 |
| 32 | 84 | 0.05 | 2.8 | 0.18 | 4.5 | 0.002 | 1.5 | 0.11 | 0.06 | 0.10 | 0.90 | 0.6 | 0.1 | 0.3 |
| 33 | 91 | 0.08 | 2.3 | 0.48 | 1.8 | 0.004 | 0.9 | 0.29 | 0.01 | 0 | 0 | 0.1 | 1.1 | 0.1 |
| 34 | 86 | 0.05 | 0.9 | 0.65 | 3.2 | 0.005 | 3.1 | 0.14 | 0.06 | 0.03 | 0.75 | 0.5 | 0.3 | 0.5 |
| 35 | 94 | 0.02 | 0.9 | 0.15 | 2.0 | 0.002 | 0.2 | 0.01 | 0.01 | 0.01 | 0.01 | 0.05 | 0.1 | 0.2 |
| 36 | 87 | 0.10 | 2.4 | 0.25 | 3.0 | 0.011 | 2.6 | 0.02 | 0.02 | 0.20 | 0.02 | 0.3 | 0.4 | 0.4 |

Table 4

| Base material | Plate thickness (mm) | Chemical components (% by mass) | | | | | | | | | | |
|---|---|---|---|---|---|---|---|---|---|---|---|---|
| | | C | Si | Mn | P | S | Ni | Cr | Mo | Ti | Al | B |
| A (SLA325B) | 20 | 0.08 | 0.20 | 1.35 | 0.005 | 0.001 | 0.01 | 0.03 | 0.01 | 0.010 | 0.03 | 0.001 |
| B (SLA325A) | 20 | 0.09 | 0.18 | 1.60 | 0.008 | 0.001 | 0.02 | 0.03 | 0.01 | 0.005 | 0.05 | 0.001 |
| C (SM400B) | 12 | 0.13 | 0.20 | 1.15 | 0.007 | 0.001 | 0.01 | 0.03 | 0.01 | 0.002 | 0.03 | 0 |

Table 5

| Base material | JIS G 3126 SLA325B or SLA325A<br>Plate thickness 20 mm (Chemical components A or B as shown in Table 4) |
|---|---|
| Groove shape | 45° V groove, Root gap = 12 mm, Use of steel backing |
| Wire | Flux cored wires with components as shown in Tables 1, 2, and 3<br>(Wire diameter: 1.2 mm) |
| Shielding gas | 80%Ar-20%$CO_2$ or 100%$CO_2$, Flow rate = 25 L/min, |
| Welding position | Flat |
| Welding condition | (1) For mixed gas<br>260 to 300 A- 28 to 32 V - 25 to 35 cm/min (Welding heat input = 1.5 to 2.2 kJ/mm)<br>(2) For $CO_2$ gas<br>260 to 300 A - 30 to 34 V - 25 to 35 cm/min (Welding heat input = 1.5 to 2.3 kJ/mm) |
| The number of layers | 6 layers and 12 passes |
| Preheating-pass temperature | 100 to 150°C |

Table 6

| Tensile test | JIS Z3111 A1 test piece, Sampling position = Center of weld metal, Test temperature at the center of plate thickness = Room temperature (20 to 23°C) |
|---|---|
| Impact test | JIS Z3111 No.4 test piece, Sampling position = Center of weld metal, Test temperature at the center of plate thickness = -60°C |
| Chemical component analysis | Analysis method: JIS G 1253 and JIS Z2613, Analysis position = Center of weld metal, center of plate thickness |
| Observation of microstructure | A surface of a sample embedded in resin was buffing, and a part of the sample was rusted by application of 2 % nitrate ethanol solution. A columnar structure of the part in the last welding pass (which is not subjected to a heat cycle) was observed using an optical microscope at the 400x magnification to calculate a rate of ferrite side plates in a visual field as an area ratio (%). (Five visual fields were observed and averaged.)<br>Alternatively, a crystal grain size was measured with a boundary of an inclination of 15° or more serving as a crystal grain boundary by azimuth analysis using the EBSP, wherein the crystals with the grain size of 20 μm or more in an approximately circular system were defined as the ferrite side plate.<br>(Measurement area: 200 μm×200 μm, Measurement step: 0.5 μm, The number of visual fields: 5) |

Table 2. Resistance to Hot Crack

Using the flux cored wires shown in Tables 1 to 3, and the low temperature steel plates with compositions shown in Table 4, weld metals were made by welding under test conditions shown in Table 7. The resistance to hot crack of the weld metals obtained was examined by a C-shaped jig constraint butt welding crack test (FISCO TEST). A ratio of a crack length to a bead length of a broken bead (% by mass) is set as a crack ratio. The wires with the crack ratio of 10 % by mass or less were determined to be acceptable (including crater cracks).

Table 7

| Base material | JIS G 3126 SLA325B plate thickness 20 mm (Chemical components A as shown in Table 4) |
|---|---|
| Groove shape | 90° V groove, Root face = 10 mm, Root gap = 2.4 mm |

(continued)

| Wire | Flux cored wires with components as shown in Tables 1, 2, and 3 (Wire diameter 1.2 mm) |
|---|---|
| Shielding gas | 80%Ar-20%$CO_2$, Flow rate = 25 L/min |
| Welding position | Flat |
| Welding condition | 280 A- 31 V - 35 cm/min |
| The number of layers | 1 layer and 1 pass |
| Preheating temperature | Room temperature (20 to 23°C) |
| The number of repetitions | Twice |

Test 3. Horizontal fillet Welding Test (Welding usability)

Using the flux cored wires shown in Tables 2 and 3, and the steel plates for welding structures with compositions shown in Table 4 (inorganic zinc primer-coated steel plates), weldmetals were made by welding under test conditions shown in Table 8, and welding usability of the weld metals was tested.

Table 8

| Base material | JIS G3106 SM400B plate thickness 12 mm (Chemical components C as shown in Table 4) * A surface of a steel plate was coated with an inorganic zinc primer of 15 $\mu$m in thickness for a test |
|---|---|
| Groove shape | T-shaped fillet welding |
| Wire | Flux cored wires with components as shown in Tables 2, and 3 (Wire diameter: 1.2 mm) |
| Shielding gas | 80%Ar-20%$CO_2$, Flow rate = 25 L/min, |
| Welding position | (1) Horizontal fillet welding (Only flux cored wire with components as shown in Table 2) (2) Vertical-up fillet welding (Only flux cored wire with components as shown in Table 3) |
| Welding condition | (1) Horizontal fillet welding: 300 A - 31 V - 30 to 50 cm/min (2) Vertical-up fillet welding: 220 A - 24 V - 10 to 15 cm/min |
| The number of layers | 1 layer and 1 pass (Welding on both sides) |
| Preheating temperature | Room temperature to 100°C |

Results of the above-mentioned tests 1 to 3 are shown in the following Tables 9 to 12. Tables 9 and 10 respectively show base materials (Table 4), welding wires (Tables 1 to 3), and weldmetal compositions (whose balance includes Fe and incidental impurities) in the examples of the invention and comparative examples. In columns concerning equations of Tables 9 and 10, values obtained by calculation of the equation ([C] $\times$ [Mn] $\times$ [Ti]) / ([Si] $\times$ [O]) are shown. Furthermore, Tables 11 and 12 show mechanical characteristics, rates of ferrite side plates, crack ratios, and welding usability in the examples of the invention and comparative examples. In Tables 11 and 12, a base material A (see Table 4) is used to measure the crack ratio, and a base material C (see Table 4) is used to evaluate the welding usability. Note that in a column regarding welding usability, a mark O indicates a good condition, while a mark $\times$ indicates a bad condition. In addition, the reason for the bad condition is described in the column about the welding usability.
The rate of the ferrite side plates was measured by two methods, namely, a method for extraction of the ferrite side plate from an image by an optical microscope, and a method for extraction of the ferrite side plate by azimuth analysis using an EPSP (Electron Backscatter Diffraction Pattern).

Table 9

| No. | Base material | Wire No. | Shielding gas | Chemical components (% by mass) | | | | | | | | | |
|---|---|---|---|---|---|---|---|---|---|---|---|---|---|
| | | | | C | Si | Mn | Ni | Mo | Ti | Al | B | O | Equation |
| 1 | A | 1 | Ar-20%CO$_2$ | 0.08 | 0.48 | 1.68 | 1.35 | 0.15 | 0.032 | 0.008 | 0.0021 | 0.041 | 0.22 |
| 2 | A | 2 | Ar-20%CO$_2$ | 0.04 | 0.20 | 1.21 | 2.15 | 0.18 | 0.055 | 0.005 | 0.0065 | 0.052 | 0.26 |
| 3 | A | 3 | Ar-20%CO$_2$ | 0.04 | 0.23 | 0.85 | 0.56 | 0.07 | 0.075 | 0.006 | 0.0045 | 0.041 | 0.27 |
| 4 | A | 4 | Ar-20%CO$_2$ | 0.07 | 0.32 | 1.68 | 0.35 | 0.12 | 0.065 | 0.004 | 0.0020 | 0.055 | 0.43 |
| 5 | A | 5 | Ar-20%CO$_2$ | 0.07 | 0.47 | 1.65 | 2.92 | 0.01 | 0.044 | 0.008 | 0.0065 | 0.041 | 0.26 |
| 6 | A | 5 | 100% CO$_2$ | 0.07 | 0.42 | 1.54 | 2.95 | 0.01 | 0.037 | 0.007 | 0.0060 | 0.047 | 0.20 |
| 7 | B | 6 | Ar-20%CO$_2$ | 0.05 | 0.22 | 0.82 | 0.55 | 0.07 | 0.072 | 0.009 | 0.0045 | 0.046 | 0.29 |
| 8 | A | 7 | Ar-20°%CO$_2$ | 0.08 | 0.23 | 1.50 | 0.30 | 0.18 | 0.031 | 0.009 | 0.0023 | 0.058 | 0.28 |
| 9 | A | 8 | Ar-20%CO$_2$ | 0.04 | 0.50 | 1.70 | 2.93 | 0.02 | 0.078 | 0.005 | 0.0050 | 0.054 | 0.20 |
| 10 | A | 9 | Ar-20%CO$_2$ | 0.05 | 0.22 | 0.81 | 1.87 | 0.08 | 0.051 | 0.003 | 0.0070 | 0.042 | 0.22 |
| 11 | A | 10 | Ar-20%CO$_2$ | 0.08 | 0.26 | 1.58 | 0.41 | 0.02 | 0.060 | 0.004 | 0.0035 | 0.051 | 0.57 |
| 12 | A | 11 | Ar-20%CO$_2$ | 0.05 | 0.38 | 1.58 | 0.83 | 0.01 | 0.065 | 0.004 | 0.0035 | 0.050 | 0.27 |
| 13 | A | 11 | 100% CO$_2$ | 0.05 | 0.33 | 1.33 | 0.83 | 0.01 | 0.055 | 0.004 | 0.0033 | 0.052 | 0.21 |
| 14 | B | 12 | Ar-20%CO$_2$ | 0.06 | 0.23 | 0.80 | 1.85 | 0.08 | 0.045 | 0.007 | 0.0068 | 0.045 | 0.21 |
| 15 | A | 13 | Ar-20%CO$_2$ | 0.08 | 0.22 | 1.50 | 0.32 | 0.19 | 0.030 | 0.010 | 0.0023 | 0.068 | 0.24 |
| 16 | A | 14 | Ar-20%CO$_2$ | 0.04 | 0.50 | 1.68 | 2.95 | 0.02 | 0.077 | 0.005 | 0.0050 | 0.053 | 0.20 |
| 17 | A | 15 | Ar-20%CO$_2$ | 0.05 | 0.20 | 0.81 | 1.89 | 0.09 | 0.048 | 0.003 | 0.0068 | 0.040 | 0.24 |
| 18 | A | 16 | Ar-20%CO$_2$ | 0.08 | 0.25 | 1.58 | 0.41 | 0.02 | 0.075 | 0.004 | 0.0025 | 0.062 | 0.61 |
| 19 | A | 17 | Ar-20%CO$_2$ | 0.05 | 0.35 | 1.58 | 0.85 | 0.01 | 0.075 | 0.004 | 0.0028 | 0.048 | 0.35 |
| 20 | A | 17 | 100% CO$_2$ | 0.05 | 0.31 | 1.33 | 0.85 | 0.01 | 0.059 | 0.004 | 0.0025 | 0.057 | 0.22 |
| 21 | B | 18 | Ar-20%CO$_2$ | 0.06 | 0.21 | 0.83 | 1.85 | 0.09 | 0.044 | 0.006 | 0.0065 | 0.043 | 0.24 |

Examples

14

Table 10

| | No. | Base material | Wire No. | Shielding gas | Chemical components (% by mass) | | | | | | | | | Equation |
|---|---|---|---|---|---|---|---|---|---|---|---|---|---|---|
| | | | | | C | Si | Mn | Ni | Mo | Ti | Al | B | O | |
| Comparative Examples | 22 | A | 19 | Ar-20%$CO_2$ | 0.04 | 0.28 | 0.60 | 0.08 | 0.23 | 0.025 | 0.010 | 0.0018 | 0.075 | 0.03 |
| | 23 | A | 20 | Ar-20%$CO_2$ | 0.09 | 0.15 | 0.95 | 1.23 | 0.02 | 0.102 | 0.005 | 0.0078 | 0.036 | 1.62 |
| | 24 | A | 21 | Ar-20%$CO_2$ | 0.05 | 0.35 | 1.91 | 3.27 | 0.01 | 0.060 | 0.004 | 0.0033 | 0.065 | 0.25 |
| | 25 | A | 22 | Ar-20%$CO_2$ | 0.03 | 0.65 | 1.55 | 2.43 | 0.02 | 0.072 | 0.007 | 0.0040 | 0.040 | 0.13 |
| | 26 | B | 22 | Ar-20%$CO_2$ | 0.04 | 0.63 | 1.60 | 2.40 | 0.02 | 0.079 | 0.008 | 0.0038 | 0.043 | 0.19 |
| | 27 | A | 23 | Ar-20%$CO_2$ | 0.06 | 0.28 | 1.04 | 0.38 | 0.09 | 0.072 | 0.012 | 0.0066 | 0.072 | 0.22 |
| | 28 | A | 23 | 100% $CO_2$ | 0.07 | 0.23 | 0.92 | 0.38 | 0.09 | 0.061 | 0.013 | 0.0064 | 0.079 | 0.22 |
| | 29 | A | 24 | Ar-20%$CO_2$ | 0.03 | 0.26 | 1.68 | 0.21 | 0.02 | 0.030 | 0.005 | 0.0080 | 0.050 | 0.12 |
| | 30 | A | 25 | Ar-20%$CO_2$ | 0.10 | 0.26 | 1.36 | 3.50 | 0.05 | 0.050 | 0.010 | 0.0050 | 0.052 | 0.50 |
| | 31 | A | 26 | Ar-20%$CO_2$ | 0.05 | 0.17 | 1.78 | 1.59 | 0.12 | 0.030 | 0.014 | 0.0014 | 0.080 | 0.20 |
| | 32 | A | 27 | Ar-20%$CO_2$ | 0.08 | 0.42 | 1.80 | 0.93 | 0.30 | 0.100 | 0.004 | 0.0023 | 0.035 | 0.98 |
| | 33 | A | 28 | Ar-20˚$CO_2$ | 0.05 | 0.60 | 0.75 | 3.19 | 0.15 | 0.070 | 0.013 | 0.0012 | 0.052 | 0.08 |
| | 34 | A | 28 | 100% $CO_2$ | 0.06 | 0.55 | 0.65 | 3.18 | 0.15 | 0.060 | 0.012 | 0.0011 | 0.054 | 0.08 |
| | 35 | A | 29 | Ar-20%$CO_2$ | 0.02 | 0.13 | 0.72 | 0.2 | 0.01 | 0.020 | 0.003 | 0.0012 | 0.080 | 0.03 |
| | 36 | A | 30 | Ar-20%$CO_2$ | 0.03 | 0.25 | 1.65 | 0.22 | 0.02 | 0.038 | 0.005 | 0.0075 | 0.045 | 0.17 |
| | 37 | A | 31 | Ar-20%$CO_2$ | 0.09 | 0.25 | 1.35 | 3.52 | 0.05 | 0.054 | 0.010 | 0.0053 | 0.052 | 0.50 |
| | 38 | A | 32 | Ar-20%$CO_2$ | 0.05 | 0.15 | 1.77 | 1.58 | 0.12 | 0.042 | 0.015 | 0.0017 | 0.078 | 0.32 |
| | 39 | A | 33 | Ar-20%$CO_2$ | 0.08 | 0.41 | 1.78 | 0.92 | 0.30 | 0.085 | 0.004 | 0.0025 | 0.038 | 0.78 |
| | 40 | A | 34 | Ar-20%$CO_2$ | 0.05 | 0.58 | 0.75 | 3.20 | 0.15 | 0.072 | 0.013 | 0.0018 | 0.048 | 0.10 |
| | 41 | A | 34 | 100% $CO_2$ | 0.06 | 0.53 | 0.68 | 3.18 | 0.15 | 0.063 | 0.012 | 0.0015 | 0.054 | 0.09 |
| | 42 | A | 35 | Ar-20%$CO_2$ | 0.02 | 0.15 | 0.75 | 0.22 | 0.01 | 0.030 | 0.003 | 0.0010 | 0.080 | 0.04 |
| | 43 | B | 36 | 100% $CO_2$ | 0.08 | 0.21 | 1.55 | 2.22 | 0.03 | 0.073 | 0.009 | 0.0048 | 0.052 | 0.83 |

Table 11

| | No. | Mechanical characteristics | | | Rate of ferrite side plates (%) | | Crack ratio (%) | Welding usability | | Note | Welding method |
| | | 0.2% load bearing capability (MPa) | Tensile strength (MPa) | Absorbed energy (J) | ① | ② | | Horizontal fillet welding | Vertical-up fillet welding | | |
|---|---|---|---|---|---|---|---|---|---|---|---|
| Examples | 1 | 630 | 698 | 118 | 8 | 8 | 3 | - (Not implemented) | - (Not implemented) | | Metal FCW |
| | 2 | 553 | 595 | 124 | 2 | 1.5 | 6 | - (Not implemented) | - (Not implemented) | | Metal FCW |
| | 3 | 440 | 492 | 120 | 10 | 9 | 6 | - (Not implemented) | - (Not implemented) | | Metal FCW |
| | 4 | 588 | 639 | 108 | 4 | 4 | 4 | - (Not implemented) | - (Not implemented) | | Metal FCW |
| | 5 | 681 | 738 | 121 | 8 | 8 | 8 | - (Not implemented) | - (Not implemented) | | Metal FCW |
| | 6 | 656 | 703 | 101 | 10 | 10 | -(Not implemented) | - (Not implemented) | - (Not implemented) | | Metal FCW |
| | 7 | 448 | 501 | 102 | 10 | 9 | 5 | - (Not implemented) | -(Not implemented) | | Metal FCW |
| | 8 | 498 | 566 | 115 | 2 | 1.5 | 2 | ○ | - (Not implemented) | | Fillet FCW |
| | 9 | 612 | 693 | 115 | 16 | 16 | 7 | ○ | - (Not implemented) | | Fillet FCW |
| | 10 | 465 | 528 | 109 | 8 | 7 | 4 | ○ | - (Not implemented) | | Fillet FCW |
| | 11 | 537 | 591 | 88 | 6 | 5 | 6 | ○ | - (Not implemented) | | Fillet FCW |
| | 12 | 578 | 614 | 120 | 10 | 10 | 4 | ○ | - (Not implemented) | | Fillet FCW |
| | 13 | 524 | 568 | 103 | 6 | 5 | - (Not implemented) | - (Not implemented) | - (Not implemented) | | Fillet FCW |

16

(continued)

| | No. | Mechanical characteristics | | | Rate of ferrite side plates (%) | | Crack ratio (%) | Welding usability | | Note | Welding method |
| | | 0.2% load bearing capability (MPa) | Tensile strength (MPa) | Absorbed energy (J) | ① | ② | | Horizontal fillet welding | Vertical-up fillet welding | | |
|---|---|---|---|---|---|---|---|---|---|---|---|
| | 14 | 478 | 532 | 112 | 7 | 6 | - (Not implemented) | - (Not implemented) | - (Not implemented) | | Fillet FCW |
| | 15 | 535 | 567 | 115 | 4 | 3 | 3 | - (Not implemented) | ○ | | All position FCW |
| | 16 | 649 | 688 | 125 | 12 | 12 | 8 | - (Not implemented) | ○ | | All position FCW |
| | 17 | 485 | 542 | 118 | 8 | 7 | 5 | - (Not implemented) | ○ | | All position FCW |
| | 18 | 565 | 612 | 94 | 8 | 8 | 7 | - (Not implemented) | ○ | | All position FCW |
| | 19 | 562 | 607 | 128 | 4 | 4 | 5 | - (Not implemented) | ○ | | All position FCW |
| | 20 | 545 | 585 | 125 | 6 | 5 | - (Not implemented) | - (Not implemented) | - (Not implemented) | | All position FCW |
| | 21 | 495 | 555 | 125 | 9 | 8 | - (Not implemented) | - (Not implemented) | - (Not implemented) | | All position FCW |
| Target value | | ≧490 | ≧80 | | | | ≦10% | | | | |

Rate of ferrite side plates (%)
① : Extraction of ferrite side plates by visual observation
② : Extraction of ferrite side plates by azimuth analysis using the EBSP

Table 12

| | No. | Mechanical characteristics | | | Rate of ferrite side plates (%) | | Crack ratio (%) | Welding usability | | Note | Welding method |
| | | 0.2% load bearing capability (MPa) | Tensile strength (MPa) | Absorbed energy (J) | ① | ② | | Horizontal fillet welding | Vertical-up fillet welding | | |
|---|---|---|---|---|---|---|---|---|---|---|---|
| | 22 | 390 | 461 | 18 | 24 | 22 | 7 | - (Not implemented) | - (Not implemented) | | Metal FCW |
| | 23 | 560 | 615 | 25 | 32 | 32 | 18 | - (Not implemented) | - (Not implemented) | | Metal FCW |
| | 24 | 727 | 762 | 27 | 2 | 2 | 20 | - (Not implemented) | - (Not implemented) | | Metal FCW |
| | 25 | 655 | 706 | 32 | 26 | 26 | 8 | - (Not implemented) | - (Not implemented) | | Metal FCW |
| | 26 | 638 | 698 | 45 | 22 | 22 | 10 | - (Not implemented) | - (Not implemented) | | Metal FCW |
| | 27 | 492 | 539 | 45 | 12 | 11 | 6 | - (Not implemented) | - (Not implemented) | | Metal FCW |
| | 28 | 484 | 515 | 41 | 16 | 15 | - (Not implemented) | - (Not implemented) | -(Not implemented) | | Metal FCW |
| | 29 | 455 | 506 | 68 | 22 | 21 | 12 | ○ | - (Not implemented) | | Fillet FCW |
| | 30 | 633 | 695 | 55 | 18 | 18 | 33 | ○ | - (Not implemented) | | Fillet FCW |
| | 31 | 571 | 608 | 41 | 8 | 8 | 7 | ×(Resistance to porosity) | - (Not implemented) | | Fillet FCW |
| | 32 | 785 | 809 | 11 | 0 | 0 | 8 | × (Convex bead) | - (Not implemented) | Cold crack | Fillet FCW |
| | 33 | 672 | 716 | 35 | 30 | 30 | 25 | ○ | - (Not implemented) | | Fillet FCW |
| Comparative Examples | 34 | 627 | 686 | 37 | 34 | 34 | - (Not implemented) | - (Not implemented) | - (Not implemented) | | Fillet FCW |

(continued)

| | No. | Mechanical characteristics | | | Rate of ferrite side plates (%) | | Crack ratio (%) | Welding usability | | Note | Welding method |
|---|---|---|---|---|---|---|---|---|---|---|---|
| | | 0.2% load bearing capability (MPa) | Tensile strength (MPa) | Absorbed energy (J) | ① | ② | | Horizontal fillet welding | Vertical-up fillet welding | | |
| | 35 | 358 | 436 | 28 | 24 | 22 | 6 | × (Convex bead) | - (Not implemented) | | Fillet FCW |
| | 36 | 480 | 532 | 68 | 26 | 25 | 12 | - (Not implemented) | ○ | | All position FCW |
| | 37 | 670 | 712 | 55 | 4 | 4 | 33 | - (Not implemented) | ○ | | All position FCW |
| | 38 | 578 | 620 | 41 | 10 | 10 | 7 | - (Not implemented) | ○ | Slag inclusions | All position FCW |
| | 39 | 730 | 788 | 15 | 2 | 2 | 8 | - (Not implemented) | × (Burn through) | | All position FCW |
| | 40 | 655 | 713 | 35 | 24 | 24 | 25 | - (Not implemented) | ○ | | All position FCW |
| | 41 | 615 | 674 | 44 | 28 | 28 | - (Not implemented) | - (Not implemented) | - (Not implemented) | | All position FCW |
| | 42 | 394 | 465 | 21 | 30 | 28 | 7 | - (Not implemented) | × (Burn through) | | All position FCW |
| | 43 | 653 | 708 | 62 | 2 | 2 | 12 | - (Not implemented) | ○ | | All position FCW |
| Target value | | ≧ 490 | ≧80 | | | | ≦ 10% | | | | |

Rate of ferrite side plates (%)
① : Extraction of ferrite side plates by visual observation
② : Extraction of ferrite side plates by azimuth analysis using the EBSP

In Examples 1 to 21, the chemical components of the weld metals and the values of ([C] × [Mn] × [Ti]) / ([Si] × [O]) satisfied the respective ranges of the invention. In each case, the toughness of the weld metal at the low temperature was also good. In Comparative Examples 22 to 43, any one of the chemical components of the weld metals and the values of ([C] × [Mn] × [Ti]) / ([Si] × [O]) deviated from the ranges of the invention, and thus the toughness of the weld metal at the low temperature did not satisfy a target value, e.g., 80 J. Examples 1 to 21 employed the welding wires No. 1 to 12. The use of the welding wires No.1 to 18 can provide the weld metals in Examples of the invention, and thus the other properties (resistance to hot crack, and welding usability) of the weld metals are not problematic from a practical point of view. In particular, the welding wires No.7 to 11 are suitable for use in the horizontal fillet welding (with good welding usability). The welding wires No.13 to 17 are suitable for use in the vertical-up fillet welding (with good welding usability). The welding wires No.7 to 11 are suitable as a wire for the flat and horizontal fillet welding. The welding wires No.13 to 17 are suitable as a titania-based welding wire for all position welding. In contrast, some of the welding wires No.19 to 36 have a high crack ratio, and/or bad welding usability. Thus, these wires No.19 to 36 cannot provide the weld metal according to Examples of the invention.

**Claims**

1.  A weld metal obtained by gas shielded arc welding using a flux cored wire, the flux cored wire including a steel sheath, and a flux charged into the steel sheath, the weld metal comprising:

    C: 0.04 to 0.08 % by mass;
    Si: 0.20 to 0.50 % by mass;
    Mn: 0.80 to 1.70 % by mass;
    Ti: 0.030 to 0.080 % by mass;
    Ni: 0.30 to 3.00 % by mass;
    Mo: 0.01 to 0.20 % by mass;
    B: 0.0020 to 0.0070 % by mass;
    O: 0.040 to 0.070 % by mass;
    Al: 0.01 % by mass or less; and
    the balance of Fe and incidental impurities,

    wherein the following equation is satisfied:

    $$([C] \times [Mn] \times [Ti]) / ([Si] \times [O]) = 0.20 \text{ to } 0.60$$

    where [C], [Mn], [Ti], [Si], and [O] represent contents of C, Mn, Ti, Si, and O, respectively,
    wherein a volume ratio of ferrite side plates in a columnar structure is 20 % by mass or less.

2.  A metal flux cored wire including a steel sheath, and a flux charged into the steel sheath, the flux cored wire being used to perform gas shielded arc welding on at least one base material, thereby obtaining the weld metal according to claim 1, said flux cored wire comprising, based on the total mass of the entire wire:

    Fe: 92.0 to 98.5 % by mass;
    C: 0.03 to 0.09 % by mass;
    Mn: 1.0 to 2.5 % by mass;
    Si: 0.20 to 0.60 % by mass;
    Ti: 0.05 to 0.30 % by mass (in terms of Ti, which corresponds to Ti content in Ti alloy and Ti oxide);
    B: 0.003 to 0.012 % by mass;
    Ni: 0.3 to 3.0 % by mass;
    Mo: 0.01 to 0.20 % by mass; and
    Al: 0.05 % by mass or less,

    said base material comprising:

    C: 0.03 to 0.15 % by mass;
    Si: 0.10 to 0.50 % by mass;

Mn: 0.80 to 1.80 % by mass;
P: 0.02 % by mass or less;
S: 0.02 % by mass or less;
Ni: 0.01 to 3.00 % by mass;
Cr: 0.2 % by mass or less;
Mo: 0.2 % by mass or less;
Ti: 0.08 % by mass or less;
Al: 0.05 % by mass or less;
B: 0.005 % by mass or less; and
the balance of Fe and incidental impurities.

3. A flux cored wire for flat and horizontal fillet welding, including a steel sheath, and a flux charged into the steel sheath, the flux cored wire being used to perform gas shielded arc welding on at least one base material, thereby obtaining the weld metal according to claim 1, said flux coredwire comprising, based on the total mass of the entire wire:

Fe: 87 to 95 % by mass;
Ti: 1.0 to 2.6 % by mass (in terms of Ti, which corresponds to Ti content in Ti alloy and Ti oxide);
C: 0.03 to 0.09 % by mass;
Mn: 1.0 to 2.5 % by mass;
Si: 0.20 to 0.60 % by mass;
B: 0.003 to 0.012 % by mass;
Ni: 0.3 to 3.0 % by mass;
Mo: 0.01 to 0.20 % by mass; and
Al: 0.05 % by mass or less,

said base material comprising:

C: 0.03 to 0.15 % by mass;
Si: 0.10 to 0.50 % by mass;
Mn: 0.80 to 1.80 % by mass;
P: 0.02 % by mass or less;
S: 0.02 % by mass or less;
Ni: 0.01 to 3.00 % by mass;
Cr: 0.2 % by mass or less;
Mo: 0.2 % by mass or less;
Ti: 0.08 % by mass or less;
Al: 0.05 % by mass or less;
B: 0.005 % by mass or less; and
the balance of Fe and incidental impurities,

wherein the $ZrO_2$ content of the flux is 0.02% to 0.50% by mass, the $Al_2O_3$ content of the flux is 0.02% to 0.80% by mass, the $SiO_2$ content of the flux is 0.1 % to 0.5% by mass and the Mg content of the flux is 0.2 to 1.0% by mass, based on the total mass of the wire.

4. A titania-based flux cored wire for all position welding, including a steel sheath, and a flux charged into the steel sheath, the flux cored wire being used to perform gas shielded arc welding on at least one base material, thereby obtaining the weld metal according to claim 1, said flux coredwire comprising, based on the total mass of the entire wire:

Fe: 85 to 93 % by mass;
Ti: 2.4 to 3.6 % by mass (in terms of Ti, which corresponds to Ti content in Ti alloy and Ti oxide);
C: 0.03 to 0.09 % by mass;
Mn: 1.0 to 2.5 % by mass;
Si: 0.20 to 0.60 % by mass;
B: 0.003 to 0.012 % by mass;
Ni: 0.3 to 3.0 % by mass;
Mo: 0.01 to 0.20 % by mass; and

Al: 0.05 % by mass or less,

said base material comprising:

C: 0.03 to 0.15 % by mass;
Si: 0.10 to 0.50 % by mass;
Mn: 0.80 to 1.80 % by mass;
P: 0.02 % by mass or less;
S: 0.02 % by mass or less;
Ni: 0.01 to 3.00 % by mass;
Cr: 0.2 % by mass or less;
Mo: 0.2 % by mass or less;
Ti: 0.08 % by mass or less;
Al: 0.05 % by mass or less;
B: 0.005 % by mass or less; and
the balance of Fe and incidental impurities,

wherein the $ZrO_2$ content of the flux is 0.02% to 0.50% by mass, the $Al_2O_3$ content of the flux is 0.02% to 0.80% by mass, the $SiO_2$ content of the flux is 0.1 % to 0.5% by mass and the Mg content of the flux is 0.2 to 1.0% by mass, based on the total mass of the wire.

**Patentansprüche**

1. Schweißmetall, erhalten durch Schutzgasschweißen unter Verwendung eines Drahts mit Flussmittelkern, wobei der Draht mit Flussmittelkern eine Stahlhülle und ein Flussmittel, das in die Stahlhülle gefüllt ist, einschließt, wobei das Schweißmetall
C: 0,04 bis 0,08 Massen-%,
Si: 0,20 bis 0,50 Massen-%,
Mn: 0,80 bis 1,70 Massen-%,
Ti: 0,030 bis 0,080 Massen-%,
Ni: 0,30 bis 3,00 Massen-%,
Mo: 0,01 bis 0,20 Massen-%,
B: 0,0020 bis 0,0070 Massen-%,
O: 0,040 bis 0,070 Massen-%,
Al: 0,01 Massen-% oder weniger und
den Rest aus Fe und nebensächlichen Verunreinigungen
umfasst,
wobei die folgende Gleichung erfüllt ist:

$$([C] \times [Mn] \times [Ti]) / ([Si] \times [O]) = 0{,}20 \text{ bis } 0{,}60,$$

wobei [C], [Mn], [Ti], [Si] und [O] den jeweiligen Gehalt an C, Mn, Ti, Si und O darstellen,
wobei ein Volumenverhältnis von Ferrit-Seitenplättchen in einer säulenförmigen Struktur 20 Massen-% oder weniger beträgt.

2. Metalldraht mit Flussmittelkern, einschließend eine Stahlhülle und ein Flussmittel, das in die Stahlhülle gefüllt ist, wobei der Draht mit Flussmittelkern verwendet wird, um Schutzgasschweißen an mindestens einem Basismaterial durchzuführen, wodurch das Schweißmetall nach Anspruch 1 erhalten wird, wobei der Draht mit Flussmittelkern, bezogen auf die Gesamtmasse des ganzen Drahts,
Fe: 92,0 bis 98,5 Massen-%,
C: 0,03 bis 0,09 Massen-%,
Mn: 1,0 bis 2,5 Massen-%,
Si: 0,20 bis 0,60 Massen-%,
Ti: 0,05 bis 0,30 Massen-% (bezogen auf Ti, entsprechend dem Ti-Gehalt in Ti-Legierung und Ti-Oxid),
B: 0,003 bis 0,012 Massen-%,

Ni: 0,3 bis 3,0 Massen-%,
Mo: 0,01 bis 0,20 Massen-% und
Al: 0,05 Massen-% oder weniger
umfasst,
wobei das Basismaterial
C: 0,03 bis 0,15 Massen-%,
Si: 0,10 bis 0,50 Massen-%,
Mn: 0,80 bis 1,80 Massen-%,
P: 0,02 Massen-% oder weniger,
S: 0,02 Massen-% oder weniger,
Ni: 0,01 bis 3,00 Massen-%,
Cr: 0,2 Massen-% oder weniger,
Mo: 0,2 Massen-% oder weniger,
Ti: 0,08 Massen-% oder weniger,
Al: 0,05 Massen-% oder weniger,
B: 0,005 Massen-% oder weniger und
den Rest aus Fe und nebensächlichen Verunreinigungen umfasst.

3. Draht mit Flussmittelkern für flaches und horizontales Kehlnahtschweißen, einschließend eine Stahlhülle und ein Flussmittel, das in die Stahlhülle gefüllt ist, wobei der Draht mit Flussmittelkern verwendet wird, um Schutzgasschweißen an mindestens einem Basismaterial durchzuführen, wodurch das Schweißmetall nach Anspruch 1 erhalten wird, wobei der Draht mit Flussmittelkern, bezogen auf die Gesamtmasse des ganzen Drahts,
Fe: 87 bis 95 Massen-%,
Ti: 1,0 bis 2,6 Massen-% (bezogen auf Ti, entsprechend dem Ti-Gehalt in Ti-Legierung und Ti-Oxid),
C: 0,03 bis 0,09 Massen-%,
Mn: 1,0 bis 2,5 Massen-%,
Si: 0,20 bis 0,60 Massen-%,
B: 0,003 bis 0,012 Massen-%,
Ni: 0,3 bis 3,0 Massen-%,
Mo: 0,01 bis 0,20 Massen-% und
Al: 0,05 Massen-% oder weniger
umfasst,
wobei das Basismaterial
C: 0,03 bis 0,15 Massen-%,
Si: 0,10 bis 0,50 Massen-%,
Mn: 0,80 bis 1,80 Massen-%,
P: 0,02 Massen-% oder weniger,
S: 0,02 Massen-% oder weniger,
Ni: 0,01 bis 3,00 Massen-%,
Cr: 0,2 Massen-% oder weniger,
Mo: 0,2 Massen-% oder weniger,
Ti: 0,08 Massen-% oder weniger,
Al: 0,05 Massen-% oder weniger,
B: 0,005 Massen-% oder weniger und
den Rest aus Fe und nebensächlichen Verunreinigungen
umfasst,
wobei der $ZrO_2$-Gehalt des Flussmittels 0,02 Massen-% bis 0,50 Massen-% beträgt, der $Al_2O_3$-Gehalt des Flussmittels 0,02 Massen-% bis 0,80 Massen-% beträgt, der $SiO_2$-Gehalt des Flussmittels 0,1 Massen-% bis 0,5 Massen-% beträgt und der Mg-Gehalt des Flussmittels 0,2 bis 1,0 Massen-% beträgt, bezogen auf die Gesamtmasse des Drahts.

4. Draht mit Flussmittelkern auf Titandioxid-Basis für das Schweißen in sämtlichen Positionen, einschließend eine Stahlhülle und ein Flussmittel, das in die Stahlhülle gefüllt ist, wobei der Draht mit Flussmittelkern verwendet wird, um Schutzgasschweißen an mindestens einem Basismaterial durchzuführen, wodurch das Schweißmetall nach Anspruch 1 erhalten wird, wobei der Draht mit Flussmittelkern, bezogen auf die Gesamtmasse des ganzen Drahts,
Fe: 85 bis 93 Massen-%,
Ti: 2,4 bis 3,6 Massen-% (bezogen auf Ti, entsprechend dem Ti-Gehalt in Ti-Legierung und Ti-Oxid),
C: 0,03 bis 0,09 Massen-%,

Mn: 1,0 bis 2,5 Massen-%,
Si: 0,20 bis 0,60 Massen-%,
B: 0,003 bis 0,012 Massen-%,
Ni: 0,3 bis 3,0 Massen-%,
Mo: 0,01 bis 0,20 Massen-% und
Al: 0,05 Massen-% oder weniger
umfasst,
wobei das Basismaterial
C: 0,03 bis 0,15 Massen-%,
Si: 0,10 bis 0,50 Massen-%,
Mn: 0,80 bis 1,80 Massen-%,
P: 0,02 Massen-% oder weniger,
S: 0,02 Massen-% oder weniger,
Ni: 0,01 bis 3,00 Massen-%,
Cr: 0,2 Massen-% oder weniger,
Mo: 0,2 Massen-% oder weniger,
Ti: 0,08 Massen-% oder weniger,
Al: 0,05 Massen-% oder weniger,
B: 0,005 Massen-% oder weniger und
den Rest aus Fe und nebensächlichen Verunreinigungen
umfasst,
wobei der $ZrO_2$-Gehalt des Flussmittels 0,02 Massen-% bis 0,50 Massen-% beträgt, der $Al_2O_3$-Gehalt des Flussmittels 0,02 Massen-% bis 0,80 Massen-% beträgt, der $SiO_2$-Gehalt des Flussmittels 0,1 Massen-% bis 0,5 Massen-% beträgt und der Mg-Gehalt des Flussmittels 0,2 bis 1,0 Massen-% beträgt, bezogen auf die Gesamtmasse des Drahts.

**Revendications**

1. Métal soudé obtenu par soudage à l'arc sous protection gazeuse à l'aide d'un fil en âme en flux, le fil en âme en flux comprenant une gaine en acier, et un flux chargé dans la gaine en acier, le métal soudé comprenant :

   C : 0,04 à 0,08 % en masse ;
   Si : 0,20 à 0,50 % en masse ;
   Mn : 0,80 à 1,70 % en masse ;
   Ti : 0,030 à 0,080 % en masse ;
   Ni : 0,30 à 3,00 % en masse ;
   Mo : 0,01 à 0,20 % en masse ;
   B : 0,0020 à 0,0070 % en masse ;
   O : 0,040 à 0,070 % en masse ;
   Al : 0,01 % en masse ou moins ; et
   le reste étant constitué de Fe et d'impuretés inévitables,
   dans lequel l'équation suivante est satisfaite :

   $$([C] \times [Mn] \times [Ti]) / ([Si] \times [O]) = 0{,}20 \text{ à } 0{,}60$$

   où [C], [Mn], [Ti], [Si] et [O] représentent respectivement les teneurs en C, Mn, Ti, Si et O,
   dans lequel un rapport de volume entre les plaques latérales de ferrite dans une structure en colonnes est de 20 % en masse ou moins.

2. Fil en âme en flux en métal comprenant une gaine en acier, et un flux chargé dans la gaine en acier, le fil en âme en flux étant utilisé pour réaliser un soudage à l'arc sous protection gazeuse sur au moins un matériau de base, obtenant ainsi le métal soudé selon la revendication 1, ledit fil en âme en flux comprenant, sur la base de la masse totale du fil entier :

   Fe : 92,0 à 98,5 % en masse ;

C : 0,03 à 0,09 % en masse ;

Mn : 1,0 à 2,5 % en masse ;

Si : 0,20 à 0,60 % en masse ;

Ti : 0,05 à 0,30 % en masse (en termes de Ti, qui correspond à la teneur en Ti dans l'alliage en Ti et l'oxyde de Ti) ;

B : 0,003 à 0,012 % en masse ;

Ni : 0,3 à 3,0 % en masse ;

Mo : 0,01 à 0,20 % en masse ; et

Al : 0,05 % en masse ou moins,

ledit matériau de base comprenant :

C : 0,03 à 0,15 % en masse ;

Si : 0,10 à 0,50 % en masse ;

Mn : 0,80 à 1,80 % en masse ;

P : 0,02 % en masse ou moins ;

S : 0,02 % en masse ou moins ;

Ni : 0,01 à 3,00 % en masse ;

Cr : 0,2 % en masse ou moins ;

Mo : 0,2 % en masse ou moins ;

Ti : 0,08 % en masse ou moins ;

Al : 0,05 % en masse ou moins ;

B : 0,005 % en masse ou moins ; et

le reste étant constitué de Fe et d'impuretés inévitables.

3. Fil en âme en flux pour soudage en cordon plat et horizontal, comprenant une gaine en acier, et un flux chargé dans la gaine en acier, le fil en âme en flux étant utilisé pour réaliser un soudage à l'arc sous protection gazeuse sur au moins un matériau de base, obtenant ainsi le métal soudé selon la revendication 1, ledit fil en âme en flux comprenant, sur la base de la masse totale du fil entier :

Fe : 87 à 95 % en masse ;

Ti : 1,0 à 2,6 % en masse (en termes de Ti, qui correspond à la teneur en Ti dans l'alliage en Ti et l'oxyde de Ti) ;

C : 0,03 à 0,09 % en masse ;

Mn : 1,0 à 2,5 % en masse ;

Si : 0,20 à 0,60 % en masse ;

B : 0,003 à 0,012 % en masse ;

Ni : 0,3 à 3,0 % en masse ;

Mo : 0,01 à 0,20 % en masse ; et

Al : 0,05 % en masse ou moins,

ledit matériau de base comprenant :

C : 0,03 à 0,15 % en masse ;

Si : 0,10 à 0,50 % en masse ;

Mn : 0,80 à 1,80 % en masse ;

P : 0,02 % en masse ou moins ;

S : 0,02 % en masse ou moins ;

Ni : 0,01 à 3,00 % en masse ;

Cr : 0,2 % en masse ou moins ;

Mo : 0,2 % en masse ou moins ;

Ti : 0,08 % en masse ou moins ;

Al : 0,05 % en masse ou moins ;

B : 0,005 % en masse ou moins ; et

le reste étant constitué de Fe et d'impuretés inévitables,

dans lequel la teneur en $ZrO_2$ du flux est de 0,02 % à 0,50 % en masse, la teneur en $Al_2O_3$ du flux est de 0,02 % à 0,80 % en masse, la teneur en $SiO_2$ du flux est de 0,1 % à 0,5 % en masse et la teneur en Mg du flux est de 0,2 à 1,0 % en masse, sur la base de la masse totale du fil.

4. Fil en âme en flux à base de dioxyde de titane pour un soudage en toutes positions, comprenant une gaine en acier, et un flux chargé dans la gaine en acier, le fil en âme en flux étant utilisé pour réaliser un soudage à l'arc sous protection gazeuse sur au moins un matériau de base, obtenant ainsi le métal soudé selon la revendication 1, ledit fil en âme en flux comprenant, sur la base de la masse totale du fil entier :

Fe : 85 à 93 % en masse ;
Ti : 2,4 à 3,6 % en masse (en termes de Ti, qui correspond à la teneur en Ti dans l'alliage en Ti et l'oxyde de Ti) ;
C : 0,03 à 0,09 % en masse ;
Mn : 1,0 à 2,5 % en masse ;
Si : 0,20 à 0,60 % en masse ;
B : 0,003 à 0,012 % en masse ;
Ni : 0,3 à 3,0 % en masse ;
Mo : 0,01 à 0,20 % en masse ; et
Al : 0,05 % en masse ou moins,

ledit matériau de base comprenant :

C : 0,03 à 0,15 % en masse ;
Si : 0,10 à 0,50 % en masse ;
Mn : 0,80 à 1,80 % en masse ;
P : 0,02 % en masse ou moins ;
S : 0,02 % en masse ou moins ;
Ni : 0,01 à 3,00 % en masse ;
Cr : 0,2 % en masse ou moins ;
Mo : 0,2 % en masse ou moins ;
Ti : 0,08 % en masse ou moins ;
Al : 0,05 % en masse ou moins ;
B : 0,005 % en masse ou moins ; et
le reste étant constitué de Fe et d'impuretés inévitables,
dans lequel la teneur en $ZrO_2$ du flux est de 0,02 % à 0,50 % en masse, la teneur en $Al_2O_3$ du flux est de 0,02 % à 0,80 % en masse, la teneur en $SiO_2$ du flux est de 0,1 % à 0,5 % en masse et la teneur en Mg du flux est de 0,2 à 1,0 % en masse, sur la base de la masse totale du fil.

**EP 1 707 303 B1**

**Patent documents cited in the description**

- JP 2000263283 A

- JP 2004315962 A